# EUROPÄISCHE PATENTANMELDUNG

(11) **EP 1 357 418 A2**
(43) Veröffentlichungstag der Anmeldung: **29.10.2003**
(21) Anmeldenummer: 03008742.3
(22) Anmeldetag: 17.04.2003
(51) Int. Cl.: G02B 27/44

(54) **Vorrichtung zur Bandbreiteneiengung eines Lichtstrahls**

(30) Priorität: 25.04.2002 DE 10219547
(71) Anmelder: Carl Zeiss Laser Optics GmbH, 73447 Oberkochen (DE)
(72) Erfinder: Herkommer, Alois, Dr., 73431 Aalen (DE)
(74) Vertreter: Patentanwälte Ruff, Wilhelm, Beier, Dauster & Partner

(57) **Zusammenfassung**

2.1. Die Erfindung bezieht sich auf eine Vorrichtung zur Bandbreiteneinengung eines Lichtstrahls für wenigstens eine vorgebbare Frequenz oder Wellenlänge mit einem Beugungsgitter (3) für die vorgegebene Frequenz oder Wellenlänge und Lichtstrahlführungsmitteln (1, 2), um einen einfallenden Lichtstrahl (4) auf das Beugungsgitter zu richten.
2.2. Erfindungsgemäß ist das Beugungsgitter aus mehreren Teilgittern für die vorgegebene Frequenz oder Wellenlänge aufgebaut, und/oder die Lichtstrahlführungsmittel sind darauf ausgelegt, den Lichtstrahl in mehrere Teilstrahlen (4a, 4b) aufzuteilen und diese in Gitterlängsrichtung wenigstens teilweise überlappend auf das Beugungsgitter zu richten, wobei die Teilstrahlen in Gitterquerrichtung versetzt und/oder unterschiedlich polarisiert und/oder unter Einfallswinkeln, die unterschiedlichen Beugungsordnungen entsprechen, auf das Beugungsgitter zur Bandbreiteneinengung bezüglich der gleichen vorgegebenen Frequenz oder Wellenlänge einfallen.
2.3. Verwendung z.B. in UV-Strahlung emittierenden Excimer-Lasern für Lithographieanlagen zur Waferstrukturierung.

## Beschreibung

Die Erfindung bezieht sich auf eine Vorrichtung zur Bandbreiteneinengung, d.h. der Einengung der Frequenz- bzw. damit gleichbedeutend der Wellenlängen-Bandbreite, eines Lichtstrahls nach dem Oberbegriff des Anspruchs 1.

Derartige Vorrichtungen werden beispielsweise für Laser und insbesondere für Excimer-Laser eingesetzt, um einen Laserstrahl mit möglichst geringer Frequenz- bzw. Wellenlängen-Bandbreite, vorliegend auch einfach als Bandbreite bezeichnet, zu erhalten. Das Beugungsgitter dient der Frequenz- bzw. Wellenlängenselektion unter Ausnutzung des Beugungseffektes. Häufig wird hierfür ein in Reflexion arbeitendes Echelle-Gitter in Littrow-Konfiguration eingesetzt. Die Lichtstrahlführungsmittel dienen dazu, den in seiner Bandbreite einzuengenden Lichtstrahl, wie einen von einem Laser-Verstärkungsmedium kommenden Laserstrahl, geeignet auf das Beugungsgitter zu richten und den von diesem frequenz- bzw. wellenlängenselektiv gebeugten Lichtstrahl geeignet weiterzuleiten, z.B. zum Laser-Verstärkungsmedium zurückzuführen. Sie beinhalten häufig ein vor dem Beugungsgitter angeordnetes Strahlaufweitungssystem.

Typische herkömmliche Vorrichtungen zur Bandbreiteneinengung eines Laserstrahls mittels Beugungsgitter, wie Echelle-Gitter, und Strahlaufweitungssystem sind in den Patentschriften US 5.946.337, US 5.978.409 und US 5.917.849 beschrieben. In der letztgenannten Patentschrift wird eine Auslegung der Lichtstrahlführungsmittel unter Verwendung einer λ/4-Platte und geeigneter Spiegel derart vorgeschlagen, dass der Laserstrahl durch Mehrfachreflexion zweimal oder noch öfter in einem zirkular polarisiertem Zustand auf das Beugungsgitter gerichtet wird, bevor er zum Laser-Verstärkungsmedium zurückgeführt wird.

Vorrichtungen zur Laserstrahl-Bandbreiteneinengung werden z.B. für Excimer-Laser verwendet, die in Lithographieanlagen zur Waferstrukturierung bzw. Halbleiterchipherstellung eingesetzt werden und Licht im normalen UV-Bereich (z.B. im Wellenlängenbereich um 250nm) oder im tiefen UV-Bereich (insbesondere im Wellenlängenbereich zwischen 150nm und 200 nm) emittieren. Begrenzende Faktoren für die erzielbare Schmalbandigkeit des Laserlichts sind insbesondere die endliche Divergenz der Laserstrahlung im Laser-Resonator und damit die Winkelunschärfe des auf das Beugungsgitter einfallenden Laserlichtes und die beugungsbegrenzte Winkelauflösung des Gitters, die umgekehrt proportional zur effektiven Gitterlänge ist. Die Laserstrahldivergenz ist bei Excimer-Lasern aufgrund der endlich großen Aperturen zur Strahlbegrenzung und der geringen Zahl von Strahlumläufen im Resonator relativ groß, typisch in der Größenordnung 1mrad. Sie wird zwar bei vorhandenem Strahlaufweitungssystem um den Faktor der Strahlaufweitung reduziert, z.B. typisch um einen Faktor 20 auf Werte in der Größenordnung von 50mrad am Beugungsgitter, die Strahlaufweitung macht jedoch andererseits, wenn z.B. eine ultra-schmalbandige Laserstrahlung mit einer Bandbreite kleiner als 1pm für die vorgegebene, selektierte Wellenlänge erzielt werden soll, entsprechend große Gitterlängen von typisch größer als 200nm erforderlich, die als vollperiodische Gitter in ihrer Herstellung sehr aufwendig sind.

Vorrichtungen zur Bandbreiteneinengung eines Lichtstrahls sind auch in Ausführungen bekannt, bei denen die Bandbreiteneinengung des Lichtstrahls nicht nur für eine, sondern für mehrere vorgegebene Frequenzen bzw. Wellenlängen vorgenommen wird. In der Offenlegungsschrift DE 40 15 861 A1 wird dazu vorgeschlagen, für zwei unterschiedliche Wellenlängen je ein reflektierendes Beugungsgitter in Littrow-Anordnung nebeneinanderliegend einzusetzen. In der Offenlegungsschrift WO 88/08631 A1 wird vorgeschlagen, zur Auswahl je einer von mehreren verschiedenen Spektrallinien eines gepulsten Laserstrahls ein zugehöriges Beugungsgitter so anzuordnen, dass sie wahlweise in den Strahlengang eingebracht werden können, z.B. durch Positionieren auf einem drehbaren Rad oder unter Verwendung einer Drehspiegelanordnung, die den Laserstrahl wahlweise auf eines der für die verschiedenen Wellenlängen selektiven Beugungsgitter richtet. Alternativ werden Drehspiegelanordnungen vorgeschlagen, die den Laserstrahl wahlweise unter verschiedenen Winkeln auf ein einzelnes Beugungsgitter richten, um je eine von mehreren verschiedenen Wellenlängen auszuwählen. In der Offenlegungsschrift DE 43 01 715 A1 wird vorgeschlagen, einen Laserstrahl zur Bandbreiteneinengung auf zwei unterschiedliche Wellenlängen in zwei Teilstrahlen aufzuteilen, die ohne Überlappung auf zwei verschiedene Bereiche eines Beugungsgitters unter zwei verschiedenen Winkeln gerichtet werden.

Der Erfindung liegt als technisches Problem die Bereitstellung einer Vorrichtung der eingangs genannten Art zugrunde, mit der sich die Bandbreite eines Lichtstrahls mit relativ geringem Aufwand vergleichsweise effektiv für eine jeweils vorgebbare Frequenz bzw. Wellenlänge einengen lässt.

Die Erfindung löst dieses Problem durch die Bereitstellung einer Vorrichtung zur Bandbreiteneinengung eines Lichtstrahls mit den Merkmalen des Anspruchs 1. Diese Vorrichtung beinhaltet eine oder mehrere Maßnahmen, die je nach Anwendungsfall einzeln oder in beliebiger Kombination realisiert sein können und die Nutzung eines vergleichsweise einfach herzustellenden Beugungsgitters ermöglichen, ohne dass dadurch das Bandbreiteneinengungsverhalten der Vorrichtung gegenüber vergleichbaren herkömmlichen Vorrichtungen wesentlich beeinträchtigt wird.

Als eine solche Maßnahme kann das Beugungsgitter in Gitterlängsrichtung aus mehreren Teilgittern mit voneinander unabhängiger Gitterstrukturperiodizität für die gleiche Frequenz bzw. Wellenlänge aufgebaut sein, d.h. die Gitterstrukturen verschiedener Teilgitter brauchen keine feste Phasenbeziehung zueinander einhalten. Dadurch wird zwar das beugungsbegrenzte Auflösungsvermögen des Gitters entsprechend herabgesetzt, es zeigt sich jedoch, dass dies in den meisten Anwendungsfällen ohne nachteilige Auswirkungen auf die erzielbare Bandbreite bleibt, da selbige auch dann noch in der Regel durch die Strahldivergenz limitiert ist. Die mehreren Teilgitter für die gleiche, gewünschte Frequenz bzw. Wellenlänge sind wesentlich einfacher herzustellen als ein einheitliches Gitter mit durchgängiger Gitterstrukturperiodizität gleicher Gesamtlänge, da im ersten Fall die Periodizität nur jeweils über einen Bruchteil der Gesamtlänge des Gitters gewährleistet sein muss.

Alternativ oder zusätzlich sind die Lichtstrahlführungsmittel darauf ausgelegt, den Lichtstrahl in mehrere Teilstrahlen für die gleiche, gewünschte Frequenz bzw. Wellenlänge aufzuteilen und diese in Gitterlängsrichtung ganz oder teilweise überlappend auf das Beugungsgitter zu richten. Dadurch lässt sich die gesamte Lichtstrahlausdehnung auf dem Gitter in Gitterlängsrichtung verkürzen, so dass ein Beugungsgitter mit entsprechend kleinerer Länge verwendbar ist, gegebenenfalls mit ausreichend größerer Breite. Auch in diesem Fall ergibt sich ein vereinfachter Herstellungsaufwand, da gegenüber herkömmlichen Anordnungen ein Gitter kürzerer Länge genügt.

Als spezielle Maßnahme hierfür können die Lichtstrahlführungsmittel so ausgelegt sein, dass sie die Teilstrahlen in Gitterquerrichtung versetzt und/oder unterschiedlich polarisiert und/oder unter verschiedenen Einfallswinkeln, die unterschiedlichen Beugungsordnungen entsprechen, auf das Beugungsgitter richten. In jedem dieser Fälle kann die Gesamtlänge des Gitters gegenüber einer vergleichbaren herkömmlichen Anordnung verkürzt werden, bis um einen der Anzahl von Teilstrahlen entsprechenden Faktor.

In einer Weiterbildung der Erfindung nach Anspruch 2 sind Beugungsgitter und Lichtstrahlführungsmittel so ausgelegt, dass der die Bandbreiteneinengung limitierende Einfluss der von der Gitterlänge abhängigen, beugungsbegrenzten Winkelauflösung des Gitters nicht größer als derjenige der Lichtstrahldivergenz ist.

In einer Weiterbildung der Erfindung nach Anspruch 3 besteht das Beugungsgitter aus mehreren in Gitterlängsrichtung nebeneinanderliegend angeordneten Teilgittern für die gewählte Frequenz bzw. Wellenlänge.

In einer Weiterbildung der Erfindung nach Anspruch 4 beinhalten die Lichtstrahlführungsmittel eine Optikeinheit, die einen ersten Teilstrahl in Gitterquerrichtung versetzt, und eine Optikeinheit, die einen zweiten Teilstrahl in Gitterlängsrichtung versetzt. Dadurch kann der einfallende Lichtstrahl in mehrere Teilstrahlen aufgeteilt werden, die in Gitterquerrichtung nebeneinanderliegend zur Bandbreiteneinengung auf die gleiche Frequenz bzw. Wellenlänge auf das Beugungsgitter auftreffen.

In einer Weiterbildung der Erfindung nach Anspruch 5 beinhalten die Lichtstrahlführungsmittel eine geeignete Optikeinheit, um aus dem Lichtstrahl einen s-polarisierten und einen p-polarisierten Teilstrahl zu erzeugen und diese Teilstrahlen in Gitterlängsrichtung wenigstens teilweise überlappend auf das Beugungsgitter einfallen zu lassen, um sie auf die gleiche, vorgegebene Frequenz bzw. Wellenlänge einzuengen.

In einer Weiterbildung der Erfindung nach Anspruch 6 beinhalten die Lichtstrahlführungsmittel eine Optikeinheit, die aus einem einfallenden Lichtstrahl mehrere, unter verschiedenen Winkeln austretende Teilstrahlen erzeugt und diese unter Einfallswinkeln auf das Beugungsgitter richtet, die zu verschiedenen Beugungsordnungen gehören, wobei sich die Teilstrahlen auf dem Beugungsgitter in Gitterlängsrichtung wenigstens teilweise überlappen und eine Bandbreiteneinengung der Teilstrahlen auf die gleiche Frequenz bzw. Wellenlänge bewirkt wird.

Vorteilhafte Ausführungsformen der Erfindung und zu Vergleichszwecken aufgenommene herkömmliche Ausführungsbeispiele sind in den Zeichnungen dargestellt und werden nachfolgend beschrieben. Hierbei zeigen:
- Fig. 1: eine Draufsicht auf ein zur Bandbreiteneinengung eines Lichtstrahls verwendbares, erfindungsgemäßes Beugungsgitter, das aus drei Teilgittern besteht,
- Fig. 2: eine Draufsicht auf ein Beugungsgitter, wie es herkömmlich zur Bandbreiteneinengung eines Lichtstrahls verwendet wird, mit dem Beugungsgitter von Fig. 1 entsprechenden Abmessungen,
- Fig. 3: eine schematische Draufsicht auf eine erfindungsgemäße Bandbreiteneinengungsvorrichtung, die zwei Teilstrahlen erzeugt und querversetzt auf das Beugungsgitter richtet,
- Fig. 4: eine schematische Seitenansicht der Vorrichtung von Fig. 3,
- Fig. 5: schematische Strahlquerschnittsansichten an drei unterschiedlichen Stellen der Vorrichtung der Fig. 3 und 4,
- Fig. 6: eine schematische Darstellung des Auftreffens zweier gemäß den Fig. 3 bis 5 querversetzter und zusätzlich in Gitterlängsrichtung aufgeweiteter Teilstrahlen auf dem Beugungsgitter,
- Fig. 7: eine Ansicht entsprechend Fig. 6, jedoch zu Vergleichszwecken für eine herkömmlich verwendete Vorrichtung,
- Fig. 8: eine Draufsicht entsprechend Fig. 3 auf eine erfindungsgemäße Bandbreiteneinengungsvorrichtung, die zwei Teilstrahlen unterschiedlicher Polarisation erzeugt und überlagernd auf das Beugungsgitter einstrahlt,
- Fig. 9: eine schematische Strahlquerschnittsansicht der zwei verschieden polarisierten Teilstrahlen von Fig. 8,
- Fig. 10: eine schematische Draufsicht auf das Beugungsgitter von Fig. 8 mit den überlagernd einfallenden, unterschiedlich polarisierten, in Gitterlängsrichtung aufgeweiteten Teilstrahlen,
- Fig. 11: eine schematische Draufsicht auf eine erfindungsgemäße Bandbreiteneinengungsvorrichtung, die zwei Teilstrahlen unter verschiedenen, zu unterschiedlichen Beugungsordnungen gehörigen Einfallswinkeln überlagernd auf das Beugungsgitter richtet,
- Fig. 12: eine schematische Strahlquerschnittsansicht der beiden Teilstrahlen von Fig. 11 und
- Fig. 13: eine schematische Draufsicht auf das Beugungsgitter von Fig. 11 mit den beiden überlagernd einfallenden, in Gitterlängsrichtung strahlaufgeweiteten Teilstrahlen.

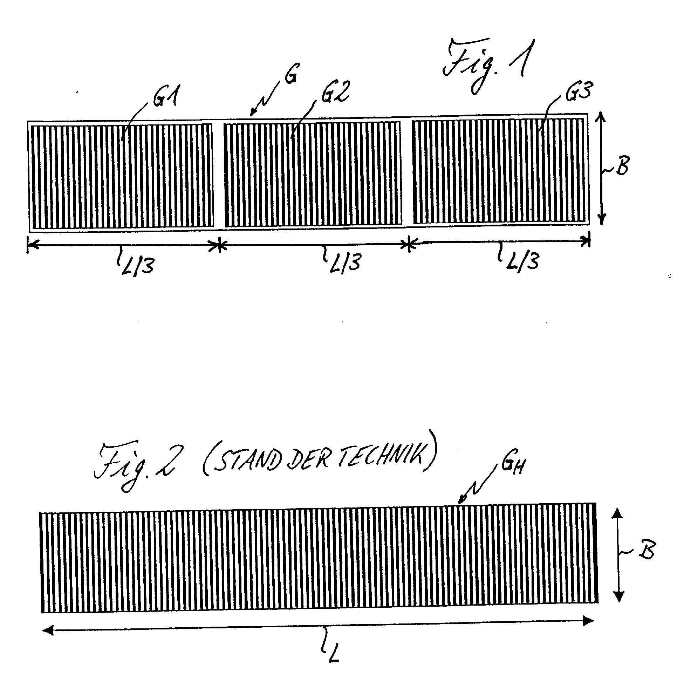

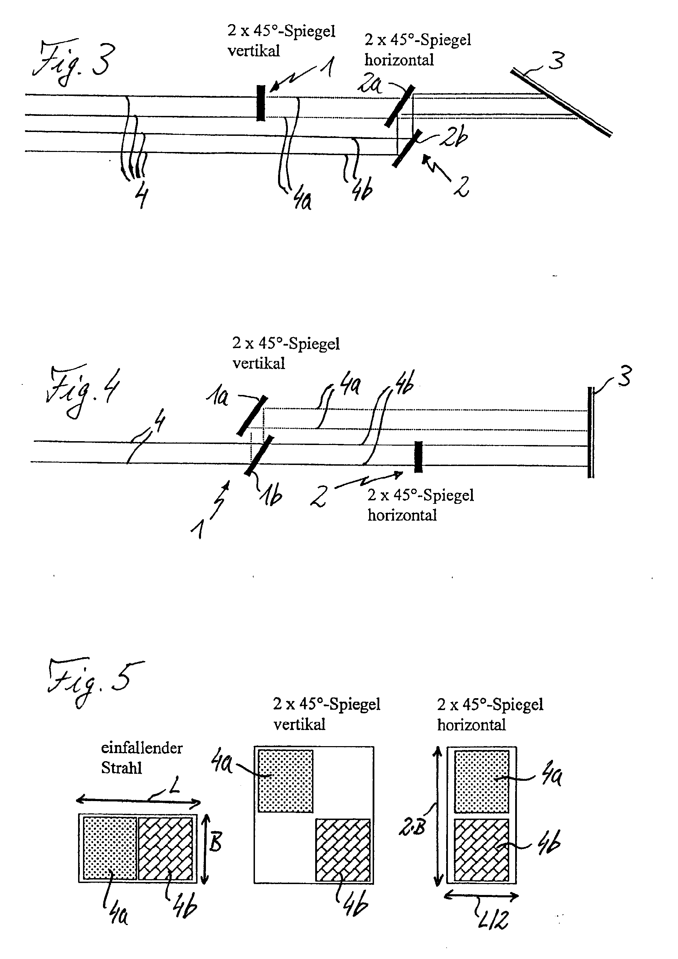

Die Fig. 1 und 2 zeigen schematisch in Draufsicht ein erfindungsgemäßes bzw. ein herkömmliches Beugungsgitter, wie sie in Vorrichtungen zur Bandbreiteneinengung eines Lichtstrahls, wie eines Excimer-Laserstrahls, Verwendung finden können.

Das herkömmlich verwendete Beugungsgitter G_{H} von Fig. 2 beinhaltet eine einheitliche Gitterstruktur aus einer Reihe von einzelnen Gitterstrukturelementen, die typischerweise aus Gitterstegen oder Gitterlinien bestehen und längs einer vorliegend als Gitterquerrichtung bezeichneten Richtung verlaufen und in einer Reihe längs einer vorliegend, wie üblich, als Gitterlängsrichtung bezeichneten Richtung aufeinanderfolgen. Es besitzt eine vorgebbare Breite B in Querrichtung und eine vorgebbare Länge L in Längsrichtung, wobei die beugungsbegrenzte Winkelauflösung des Gitters bekanntermaßen umgekehrt proportional zur Gitterlänge L ist.

Das erfindungsgemäße Beugungsgitter G von Fig. 1 ist aus drei Teilgittern G1, G2, G3 aufgebaut, die in Gitterlängsrichtung nebeneinanderliegend angeordnet sind. Bei diesem Gitter G brauchen nur die Strukturelemente eines jeweiligen Teilgitters G1, G2, G3 untereinander eine feste Phasenbeziehung zueinander einhalten, während dies für die Gitterstrukturelemente benachbarter Teilgitter nicht zwingend erforderlich ist. Wenn das erfindungsgemäße Beugungsgitter G dieselben Außenabmessungen wie das herkömmliche Beugungsgitter G_{H} aufweist, hat jedes der drei gleich lang gewählten Teilgitter G1, G2, G3 eine Länge L/3 von einem Drittel der Gesamtlänge L. Dementsprechend muss die feste Phasenbeziehung der Gitterstrukturelemente nur jeweils über eine reduzierte Länge von L/3 und nicht über die Gesamtlänge L aufrechterhalten werden, was die Herstellung des erfindungsgemäßen Gitters G von Fig. 1 wesentlich einfacher macht als diejenige des herkömmlichen Gitters G_{H} von Fig. 2. Alle Teilgitter G1, G2, G3 sind auf eine Bandbreiteneinengung auf die gleiche, vorgebbare Frequenz bzw. Wellenlänge ausgelegt, z.B. durch Verwenden identischer Gitterstrukturen.

Zwar kann diese Nichteinhaltung einer festen Phasenbeziehung zwischen den Gitterstrukturelementen verschiedener Teilgitter in einem Phasensprung für eine an dem Gitter G reflektierte, kohärente Lichtwelle und damit in einer Reduzierung des beugungsbegrenzten Gitterauflösungsvermögens um den entsprechenden Faktor drei resultieren, dies hat jedoch im allgemeinen einen allenfalls geringen Einfluss auf die Bandbreite des Lichtstrahls, da die Strahldivergenz des am Gitter G reflektierten Lichtstrahls normalerweise um mindestens den Faktor drei größer als das Auflösungsvermögen des herkömmlichen Gitters G_{H} und daher immer noch die bestimmende Größe für die Limitierung der Bandbreite ist.

Es versteht sich, dass alternativ zum gezeigten, dreigeteilten Gitter G auch Beugungsgitter realisiert und eingesetzt werden können, die aus zwei oder aus mehr als drei in Gitterlängsrichtung nebeneinanderliegenden Teilgittern aufgebaut sind, wobei die oben zum dreiteiligen Gitter G genannten Eigenschaften und Vorteile entsprechend gelten. Insbesondere sind auch diese geteilten Gitter im Vergleich zum herkömmlichen, über die Gesamtlänge L vollperiodischen Gitter G_{H} bei gleichen Gesamtabmessungen leichter herzustellen, da die Periodizität der Gitterstrukturelemente nur über das jeweilige Teilgitter der Länge L/n mit n als der Anzahl der Teilgitter, aufrechterhalten werden muss.

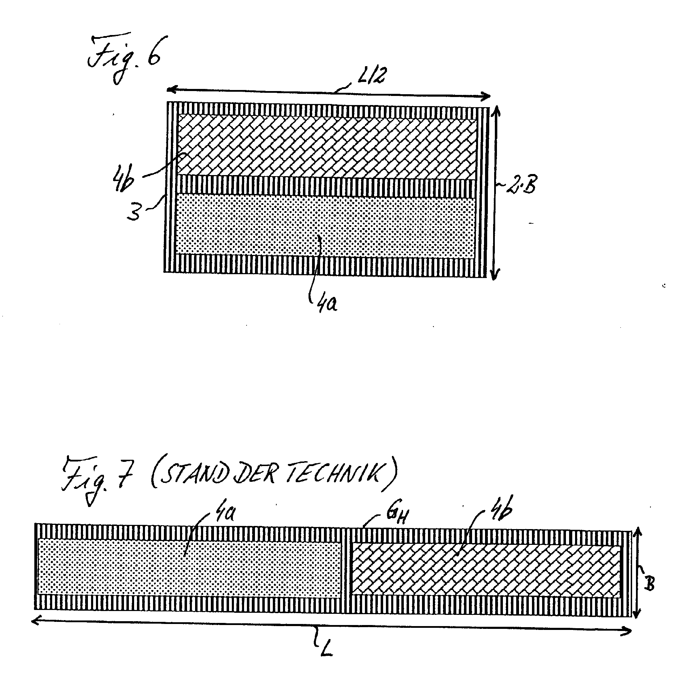

In den Fig. 3 bis 7 ist eine weitere erfindungsgemäße Ausführungsform einer Vorrichtung zur Bandbreiteneinengung auf eine gewünschte, vorgegebene Frequenz bzw. Wellenlänge mit ihren hier interessierenden Komponenten und im Vergleich zu einer herkömmlichen solchen Vorrichtung veranschaulicht. Wie in allen anderen gezeigten Fällen sind der Übersichtlichkeit halber die gegebenenfalls zusätzlich verwendeten herkömmlichen Komponenten, wie z.B. ein Strahlaufweitungssystem, nicht explizit dargestellt.

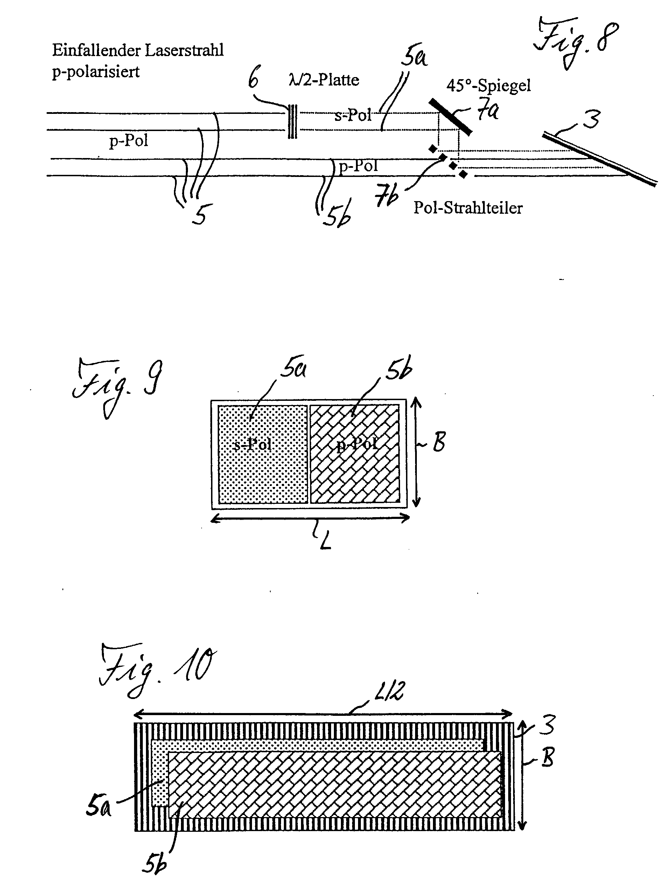

Die Fig. 3 und 4 zeigen die Vorrichtung in einer Draufsicht bzw. in einer Seitenansicht. Wie daraus ersichtlich, beinhaltet diese Vorrichtung Lichtstrahlführungsmittel mit zwei Paaren 1,2 von je zwei 45°-Umlenkspiegeln 1a, 1b bzw. 2a, 2b. In jedem Spiegelpaar 1,2 sind die beiden Spiegel parallel versetzt angeordnet, und die beiden Spiegelpaare 1,2 sind im Lichtstrahlengang hintereinander vor einem Beugungsgitter 3 angeordnet, das z.B. ein Echelle-Gitter in Littrow-Konfiguration sein kann.

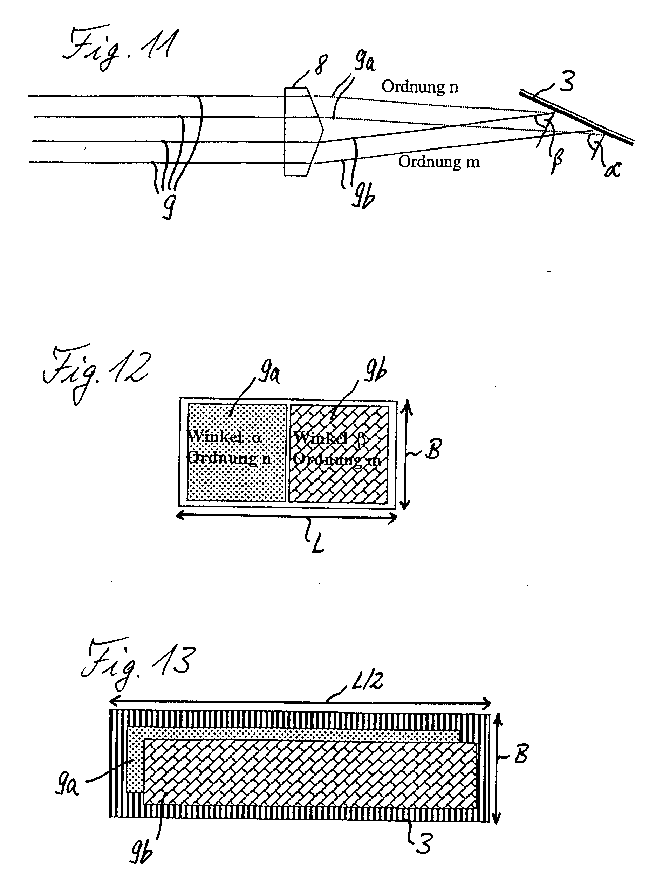

Wie in Fig. 5 anhand schematischer Strahlquerschnitte verdeutlicht, erzeugt das erste Spiegelpaar 1, dessen beide Spiegel 1a, 1b vertikal versetzt angeordnet sind, aus einem einfallenden Lichtstrahl 4 einen ersten Teilstrahl 4a aus der einen, linken Hälfte des einfallenden Strahls 4, indem diese vom ersten Spiegelpaar 1 vertikal, d.h. in Gitterquerrichtung, ungefähr um die Höhe des einfallenden Lichtstrahls 4 versetzt wird. Die andere, rechte Hälfte 4b des einfallenden Lichtstrahls 4 bleibt vom ersten Spiegelpaar 1 unbeeinflusst und wird als zweiter Teilstrahl 4b vom zweiten Spiegelpaar 2 um die halbe Querschnittslänge L/2 des einfallenden Lichtstrahls 4 und damit um die Querschnittslänge jedes der beiden Teilstrahlen 4a, 4b horizontal versetzt, wozu die beiden Spiegel 2a, 2b des zweiten Spiegelpaars 2 entsprechend horizontal versetzt angeordnet sind. Zur Verdeutlichung sind die beiden Teilstrahlen 4a, 4b in der Schemadarstellung von Fig. 5 durch unterschiedliche Flächenmuster repräsentiert.

Insgesamt wird folglich der einfallende Lichtstrahl 4 mit angenommener Querschnittslänge L in Längsrichtung des Beugungsgitters 3 und angenommener Querschnittsbreite B in Querrichtung des Gitters 3 durch die beiden Spiegelpaare 1, 2 in zwei Teilstrahlen 4a, 4b aufgeteilt, die in Gitterlängsrichtung vollständig überlappend, in Gitterquerrichtung fluchtend nebeneinanderliegend auf das Beugungsgitter 3 einfallen. Sie nehmen dort folglich nur die halbe Länge L/2 und dafür die doppelte Breite 2B verglichen mit einer herkömmlichen Anordnung ein, bei welcher der einfallende Strahl 4 ohne eine solche Aufteilung in Teilstrahlen und Versetzung derselben auf ein Beugungsgitter gerichtet wird. Für beide Teilstrahlen 4a, 4b wird eine Bandbreiteneinengung auf die gleiche, gewünschte Frequenz bzw. Wellenlänge bewirkt.

Die Fig. 6 und 7 veranschaulichen diese Verhältnisse nochmals im Vergleich für einen in Gitterlängsrichtung aufgeweiteten, einfallenden Lichtstrahl mit Querschnittlänge L und Querschnittbreite B. Bei der herkömmlichen Anordnung gemäß Fig. 7 fällt der Lichtstrahl mit seiner linken Hälfte 4a auf den linken Teil und mit seiner rechten Hälfte 4b auf den rechten Teil des einteiligen, herkömmlichen Beugungsgitters G_{H} ein. Das herkömmliche Gitter G_{H} besitzt folglich eine der Querschnittslänge des einfallenden Lichtstrahls entsprechende Länge L und eine der Querschnittsbreite B des einfallenden Lichtstrahls entsprechende Breite.

Im Gegensatz dazu fällt bei der erfindungsgemäßen Vorrichtung gemäß den Fig. 3 und 4 der rechte Teil 4b des einfallenden Lichtstrahls fluchtend in Gitterquerrichtung versetzt zum linken Teil 4a auf das Beugungsgitter 3 ein, wie in Fig. 6 veranschaulicht, so dass eine reduzierte Ausdehnung des Gitters in Längsrichtung genügt, die der halben Länge L/2 des herkömmlicher Weise verwendeten Gitters G_{H} entspricht. Dafür hat das erfindungsgemäß verwendete Gitter 3 die doppelte effektive Nutzbreite B. Diese Verlängerung in Gitterquerrichtung ist jedoch herstellungstechnisch unkritisch, da die einzelnen Gitterstrukturelemente lediglich entsprechend verlängert auszubilden sind. Die Längenverkürzung des Gitters 3 um die Hälfte spart hingegen signifikant Herstellungsaufwand ein, da auf diese Weise die Periodizität der Gitterstrukturelemente verglichen mit dem herkömmlichen Gitter G_{H} nur noch über die halbe Länge L/2 aufrechterhalten werden muss. Die mit der Längenhalbierung einhergehende Halbierung der beugungsbegrenzten Winkelauflösung des Gitters 3 führt in aller Regel nicht zu einer Beeinträchtigung der durch die Vorrichtung erzielbaren Bandbreiteneinengung, da meistens auch dann noch die Strahldivergenz als limitierender Faktor fungiert.

Es versteht sich, dass in alternativen Ausführungsformen eine Aufteilung des einfallenden Lichtstrahls in mehr als zwei Teilstrahlen vorgesehen sein kann, die dann wiederum zur Bandbreiteneinengung auf die gleiche Frequenz bzw. Wellenlänge in Gitterlängsrichtung ganz oder teilweise überlappend, in Gitterquerrichtung aufeinanderfolgend auf das Beugungsgitter gerichtet werden, so dass eine Längenreduzierung des Gitters bis zu einem der Anzahl von Teilstrahlen entsprechenden Faktor möglich ist.

In den Fig. 8 bis 10 ist eine weitere erfindungsgemäße Realisierung einer Bandbreiteneinengungsvorrichtung veranschaulicht, bei der eine Längenreduzierung des verwendeten Beugungsgitters 3 dadurch erzielt wird, dass aus einem einfallenden Lichtstrahl 5 zwei unterschiedlich polarisierte Teilstrahlen 5a, 5b erzeugt und sich in Gitterlängsrichtung und Gitterquerrichtung praktisch vollständig überlappend gleichzeitig auf dieselbe effektive Beugungsgitterfläche gerichtet werden, um in ihrer Bandbreite auf die gleiche Frequenz bzw. Wellenlänge eingeengt zu werden.

Zunächst ist der insgesamt einfallende Lichtstrahl 5 durch entsprechende Mittel p-polarisiert. Dies ist beispielsweise für einen Laserstrahl der Fall, der vom Laser-Verstärkungsmedium durch ein schräg gestelltes Austrittsfenster mit einem Schrägwinkel unterhalb oder nahe des Brewster-Winkel austritt und über ein Prismenstrahlaufweitungssystem geführt wird, was aufgrund der starken Polarisationsabhängigkeit der Reflexionsverluste an den Prismen bekanntermaßen zu hochgradig p-polarisiertem Laserlicht führt. Die Bandbreiteneinengungsvorrichtung beinhaltet in diesem Beispiel eine λ/2-Platte 6, die in die eine, linke Hälfte des einfallenden Lichtstrahls 5 eingebracht ist, so dass dieser linke Lichtstrahlteil in einen s-polarisierten, ersten Teilstrahl 5a transformiert wird, während der übrige, rechte Lichtstrahlteil als ein zweiter, p-polarisierter Teilstrahl 5b verbleibt. Diese Situation veranschaulicht Fig. 9 anhand eines schematischen Strahlquerschnitts, wobei die beiden Teilstrahlen 5a, 5b wiederum durch unterschiedliche Flächenmuster symbolisiert sind.

Ein anschließendes Paar aus zwei parallel horizontal versetzten 45°-Spiegeln 7a, 7b sorgt dann für die vollständige, geometrische Überlagerung der beiden Teilstrahlen 5a, 5b, die auf diese Weise zusammen auf denselben Bereich des Beugungsgitters 3 gerichtet werden. Dies ist in Fig. 10 schematisch dargestellt, wobei die beiden Teilstrahlen 5a, 5b mit ihren Querschnitten leicht perspektivisch versetzt wiedergegeben sind, um sie beide erkennen zu können. Für die Überlagerung der beiden Teilstrahlen 5a, 5b reflektiert der eine Spiegel 7a den s-polarisierten Teilstrahl 5a auf den anderen Spiegel 7b, der als Polarisationsstrahlteiler ausgelegt ist, wobei er s-polarisiertes Licht reflektiert und p-polarisiertes Licht durchlässt.

Durch das Überlagern der beiden unterschiedlich polarisierten Teilstrahlen 5a, 5b auf dem Beugungsgitter 3 genügt für letzteres wiederum die halbe Ausdehnung in Gitterlängsrichtung, verglichen mit einem herkömmlicher Weise verwendeten Gitter, wobei in diesem Beispiel die Breite in Gitterquerrichtung unverändert bleiben kann. Mit anderen Worten benötigt der einfallende Lichtstrahl 5 mit Querschnittslänge L und Querschnittsbreite B nur einen effektiven Beugungsgitterbereich der Länge L/2 in Gitterlängsrichtung und der Breite B in Gitterquerrichtung, wie in den Fig. 9 und 10 eingetragen, die in dieser Hinsicht allerdings nicht maßstäblich gezeichnet sind. Wiederum ergibt sich der Vorteil, dass für die erfindungsgemäße Bandbreiteneinengungsvorrichtung verglichen mit herkömmlichen Anordnungen ein einfacher herzustellendes Beugungsgitter mit reduzierter Länge verwendet werden kann.

In den Fig. 11 bis 13 ist eine weitere erfindungsgemäße Bandbreiteneinengungsvorrichtung illustriert, welche die Verwendung eines Beugungsgitters mit reduzierter Längenausdehnung ermöglicht. In diesem Beispiel beinhalten die Strahlführungsmittel der Vorrichtung ein optisches Element 8, das aus einem einfallenden Lichtstrahl 9 zwei Teilstrahlen 9a, 9b erzeugt, die mit unterschiedlichen Einfallswinkeln α, β auf das Beugungsgitter 3 gerichtet werden, und zwar praktisch vollständig überlagert auf denselben effektiven Beugungsgitterbereich. Die Einfallswinkel α, β sind speziell so gewählt, dass sie zwei verschiedenen Gitterbeugungsordnungen entsprechen, z.B. für den einen Teilstrahl 9a einer n. Ordnung und für den anderen Teilstrahl 9b einer m. Ordnung, mit n ≠ m. Für beide Teilstrahlen 9a, 9b wird wiederum eine Bandbreiteneinengung auf die gleiche, vorgegebene Frequenz bzw. Wellenlänge bewirkt. Als ein solches optisches Element eignet sich z.B. ein Axikon.

Wiederum kann, wie in den Fig. 12 und 13 veranschaulicht, die den Fig. 9 bzw. 10 entsprechen, durch die Aufteilung des einfallenden Strahls 9 mit angenommener Querschnittslänge L und angenommener Querschnittsbreite B durch Aufteilung in die beiden Teilstrahlen 9a, 9b und deren Überlagerung auf dem Beugungsgitter 3 ein Gitter mit halbierter Länge L/2 in Gitterlängsrichtung bei der Strahlhöhe entsprechender, effektiver Gitterbreite B verwendet werden, das einfacher herzustellen ist als ein herkömmlicher Weise verwendetes, vollperiodisches Gitter der Länge L. In diesem Beispiel sind die beiden Teilstrahlen 9a, 9b durch verschiedene Beugungsordnungen n, m bei der Beugung am Gitter 3 mittels Wahl geeignet unterschiedlicher Einfallswinkel α, β voneinander unterschieden.

Es versteht sich, dass in alternativen Ausführungsformen eine Aufteilung des einfallenden Lichtstrahls in mehr als zwei Teilstrahlen mit je unterschiedlichen Einfallswinkeln auf das Beugungsgitter vorgesehen sein kann, die zu unterschiedlichen Beugungsordnungen gehören, um sie in ihrer Bandbreite auf die gleiche Frequenz bzw. Wellenlänge einzuengen.

Wie sich es sich für den Fachmann versteht und daher keiner weiteren Erläuterung bedarf, entspricht bei Verwendung eines in Reflexion arbeitenden Echelle-Gitters in Littrow-Konfiguration, der Strahlengang des Lichtes nach Reflexion am Gitter dem umgekehrten Strahlengang des einfallenden Lichtstrahls. Alternativ umfasst die Erfindung auch Vorrichtungen mit anderen Reflexionsgittern und mit in Transmission arbeitenden Beugungsgittern zur Wellenlängen- bzw. Frequenzselektion.

Wie die gezeigten und oben erläuterten Ausführungsbeispiele deutlich machen, erlaubt die Erfindung zur Bandbreiteneinengung auf eine vorgebbare Frequenz bzw. Wellenlänge die Nutzung eines Beugungsgitters mit vergleichsweise kleiner Gitterlänge, das entsprechend einfach herzustellen ist, wobei damit meistens keine Beeinträchtigung der erzielbaren Bandbreite verbunden ist, da diese vorwiegend durch Strahldivergenz limitiert ist. Die Erfindung ist z.B. in Lasern nutzbringend verwendbar, mit denen extrem schmalbandige UV-Strahlung zu Waferbelichtung in Lithographieanlagen bereitgestellt wird.

Es versteht sich, dass die Erfindung auch eine Vorrichtung zur Bandbreiteneinengung eines Lichtstrahls umfasst, die durch eine entsprechende Vervielfachung der zu den vorstehenden Ausführungsbeispielen erläuterten Komponenten eine Bandbreiteneinengung auf mehrere unterschiedliche Frequenzen oder Wellenlängen bewirkt, wie z.B. durch Verwenden mehrerer, für unterschiedliche Wellenlängen selektiver Beugungsgitter, die jeweils aus mehreren Teilgittern aufgebaut sind, und/oder durch Verwenden mehrerer, für unterschiedliche Wellenlängen selektiver Beugungsgitter und von zugehörigen Lichtstrahlführungsmitteln, die den Lichtstrahl für wenigstens eines dieser Beugungsgitter in mehrere Teilstrahlen aufteilen und diese in Gitterlängsrichtung wenigstens teilweise überlappend auf das betreffende Beugungsgitter richten.

## Patentansprüche

1. Vorrichtung zur Bandbreiteneinengung eines Lichtstrahls für wenigstens eine vorgebbare Frequenz oder Wellenlänge, insbesondere eines Laserstrahls, mit
- einem Beugungsgitter (G3) für die vorgegebene Frequenz oder Wellenlänge mit in einer Gitterlängsrichtung aufeinanderfolgenden, sich in einer Gitterquerrichtung erstreckenden Gitterstrukturelementen und
- Lichtstrahlführungsmitteln, die einen einfallenden Lichtstrahl (4, 5, 9) auf das Beugungsgitter richten,
**dadurch gekennzeichnet, dass**
- das Beugungsgitter (G) aus mehreren Teilgittern (G1, G2, G3) für die vorgegebene Frequenz oder Wellenlänge aufgebaut ist und/oder
- die Lichtstrahlführungsmittel darauf ausgelegt sind, den Lichtstrahl (4, 5, 9) in mehrere Teilstrahlen (4a, 4b, 5a, 5b, 9a, 9b) aufzuteilen und diese in Gitterlängsrichtung wenigstens teilweise überlappend auf das Beugungsgitter (3) zu richten, wobei sie die Teilstrahlen in Gitterquerrichtung versetzt und/oder unterschiedlich polarisiert und/oder unter Einfallswinkeln (α, β), die unterschiedlichen Beugungsordnungen (n, m) entsprechen, zur Bandbreiteneinengung bezüglich der gleichen vorgegebenen Frequenz oder Wellenlänge auf das Beugungsgitter führen.

2. Bandbreiteneinengungsvorrichtung nach Anspruch 1, weiter **dadurch gekennzeichnet, dass** das Beugungsgitter und die Lichtstrahlführungsmittel so ausgelegt sind, dass die bandbreiteneinengungsbegrenzende Wirkung des beugungsbegrenzten Auslösungsvermögens des Beugungsgitters kleiner oder höchstens gleich groß ist wie die bandbreiteneinengungsbegrenzende Wirkung der Divergenz des Lichtstrahls.

3. Bandbreiteneinengungsvorrichtung nach Anspruch 1 oder 2, weiter
**dadurch gekennzeichnet, dass** das Beugungsgitter (G) aus mehreren in Gitterlängsrichtung nebeneinanderliegend angeordneten Teilgittern (G1, G2, G3) zur Bandbreiteneinengung bezüglich der gleichen vorgegebenen Frequenz oder Wellenlänge aufgebaut ist.

4. Bandbreiteneinengungsvorrichtung nach einem der Ansprüche 1 bis 3, weiter **dadurch gekennzeichnet, dass** die Lichtstrahlführungsmittel eine Optikeinheit (1) zur Versetzung eines ersten Teilstrahls (4a) in Gitterquerrichtung und eine Optikeinheit (2) zur Versetzung eines zweiten Teilstrahls (4b) in Gitterlängsrichtung umfassen.

5. Bandbreiteneinengungsvorrichtung nach einem der Ansprüche 1 bis 4, weiter **dadurch gekennzeichnet, dass** die Lichtstrahlführungsmittel eine Optikeinheit (6, 7a, 7b) zur Erzeugung eines s-polarisierten Teilstrahls (5a) und eines p-polarisierten Teilstrahls (5b) und zum in Gitterlängsrichtung wenigstens teilweise überlappenden Einstrahlen der Teilstrahlen auf das Beugungsgitter (3) zur Bandbreiteneinengung bezüglich der gleichen vorgegebenen Frequenz oder Wellenlänge umfassen.

6. Bandbreiteneinengungsvorrichtung nach einem der Ansprüche 1 bis 5, weiter **dadurch gekennzeichnet, dass** die Lichtstrahlführungsmittel eine Optikeinheit (8) zur Aufteilung des Lichtstrahls (9) in mehrere Teilstrahlen (9a, 9b) beinhalten, die unter verschiedenen Einfallswinkeln (α, β), welche unterschiedlichen Beugungsordnungen (n, m) entsprechen, unter wenigstens teilweiser Überlappung in Gitterlängsrichtung auf das Beugungsgitter zur Bandbreiteneinengung bezüglich der gleichen vorgegebenen Frequenz oder Wellenlänge einfallen.
